# EUROPEAN PATENT APPLICATION

(11) **EP 2 083 380 A1**
(43) Date of publication of application: **29.07.2009**
(21) Application number: 08172208.4
(22) Date of filing: 18.12.2008
(51) Int. Cl.: G06Q 10/00

(54) **System for instantly and remotely managing assets of air conditioning equipment**

(30) Priority: 15.01.2008 TW 97101442
(71) Applicant: Chunghwa Telecom Co., Ltd., Tapei 100 (TW)
(72) Inventor: Liao, Shiue-Juan, Taipei 100 (TW); Huang, Chun-Hung, Taipei 100 (TW); Chen, Chien-Yuan, Taipei 100 (TW); Lin, Shu-Fen, Taipei 100 (TW); Wang, Yu-Huan, Taipei 100 (TW); Wang, Tsung-Ray, Taipei 100 (TW)
(74) Representative: Epping - Hermann - Fischer

(57) **Abstract**

A system for instantly and remotely managing assets of air conditioning equipment is provided, which is applied to remote air conditioning equipment for processing instant network asset monitoring and asset management of the air conditioning equipment via network system. The system is characterized by providing instant control and management over operational state of the controlled air conditioning equipment, thus achieving objective of instant and remote control over air conditioning equipment asset, and further achieving objective of decreasing operational cost.

## Description

### BACKGROUND OF THE INVENTION

### 1. Field of the Invention

This invention generally relates to a computer network technique, and more specifically, to a system for instantly and remotely managing assets of air conditioning equipment, which allows user to locate remote air conditioning equipment via a network system for processing instant network asset monitoring and asset management.

### 2. Description of Related Art

Air conditioning equipment is electronic equipment universally applied and installed inside buildings, especially large-scale commercial venues, e.g., office buildings, factory buildings, restaurants, hotels, hospitals, convenience stores, supermarkets, wholesale stores, department stores, theaters, exhibition centers; these days, an air conditioning equipment commonly integrates facilities such as air conditioner heater unit, air handling unit (AHU) precooling air handler (PAH) fan coil unit (FCU) exhaust fan, water tower equipment, motor and/or cool water transmission equipment, etc.

The air conditioning equipment is part of the fixed assets of an enterprise, and according to universal accounting principles, fixed assets must be recorded in the balance sheet as reference criteria at the time when the enterprise, investors, or the government is auditing an assets list of the enterprise.

According to conventional air conditioning equipment asset management, after the air conditioning equipment is purchased and then installed by technicians, management of the air conditioning equipment entails doing regular or irregular monitoring during operational process and providing maintenance of the air conditioning equipment, or when a user finds out any malfunction and then reports to the management team for further examination and repair tasks; the management team record details of monitoring, maintenance, or examination, and when an air conditioning equipment that has a breakdown or is to be retired, the management team has to notify an accounting unit to record-off the air conditioning equipment that has a breakdown or is to be retired.

Apparently, the conventional mode of managing assets of air conditioning equipment has a disadvantage, namely consuming time and energy and thus of low efficiency in practical application; in addition, when breakdown or abnormal operation happens to the air conditioning equipment, generally, the management team in charge of the air conditioning equipment or the accounting unit cannot be informed instantly, thereby delaying asset management.

### SUMMARY OF THE INVENTION

In view of the disadvantages of the prior art mentioned above, it is a primary objective of the present invention to provide a system for instantly and remotely managing assets of air conditioning equipment, which is capable of allowing management of remote air conditioning equipment and processing instant network asset monitoring and asset management via network.

Another objective of the present invention is to provide a system for instantly and remotely managing assets of air conditioning equipment, which is capable of, at the time abnormal operation happens to the monitored air conditioning equipment, notifying the user end instantly of the situation, to thereby allow the user end to work on related maintenance tasks immediately.

To achieve the aforementioned and other objectives, a system for instantly and remotely managing assets of air conditioning equipment is provided according to the present invention. The system for instantly and remotely managing assets of air conditioning equipment comprises: a storage unit for storing asset information, record information of operational state, and relation information of operational status and asset status corresponding to various air conditioning equipment; a monitoring unit connected to the air conditioning equipment and is for monitoring the operational state of the air conditioning equipment, and transmitting the monitored operational state to the storage unit; an analyzing module for determining asset status corresponding to operational status of the air conditioning equipment, based on asset information, record information of operational state, and relation information of operational status and asset status saved in the storage unit; and a notifying module is for notifying user end of the air conditioning equipment of asset status.

In one embodiment of the present invention, the system for instantly and remotely managing assets of air conditioning equipment according to the present invention is connected to an asset management end, which keeps asset records corresponding to various air conditioning equipment, and further comprises a set module for setting asset records saved in the asset management end based on the asset status.

In another embodiment of the present invention, the system for instantly and remotely managing assets of air conditioning equipment according to the present invention is divided into an asset monitoring end and an air conditioning equipment monitoring end. The storage unit, the analyzing module, the notifying module and/or the set module are allocated to the asset monitoring end, while the monitoring unit is allocated to the air conditioning equipment monitoring end.

In a further embodiment of the present invention, the system for instantly and remotely managing assets of air conditioning equipment according to the present invention is connected to a local area network, wherein the asset monitoring end and the air conditioning equipment monitoring end are allocated to the local area network.

In still another embodiment of the present invention, the system for instantly and remotely managing assets of air conditioning equipment according to the present invention is connected to a wide area network (WAN) wherein the asset monitoring end and the air conditioning equipment monitoring end are allowed to be dispersedly allocated to the wide area network.

Compared with prior art, the system for instantly and remotely managing assets of air conditioning equipment according to the present invention is characterized by, via operations among the storage unit, the monitoring unit, the analyzing module, the notifying module and/or the set module, allowing air conditioning equipment management to locate local or remote air conditioning equipment and then to process instant network asset monitoring and asset management via data processing device and/or network system, as well as allowing management to be notified instantly of situation of abnormal operations of monitored air conditioning equipment and then to perform maintenance tasks immediately.

### BRIEF DESCRIPTION OF DRAWINGS

The present invention can be more fully understood by reading the following detailed description of the preferred embodiments, with reference made to the accompanying drawings, wherein:
FIG. 1 is an application framework diagram of a first embodiment of the system for instantly and remotely managing assets of air conditioning equipment according to the present invention;
FIG. 2 is an application framework diagram of a second embodiment of the system for instantly and remotely managing assets of air conditioning equipment according to the present invention; and
FIG. 3 is an application framework diagram of a third embodiment of the system for instantly and remotely managing assets of air conditioning equipment according to the present invention.

### DETAILED DESCRIPTION OF PREFERRED EMBODIMENTS

The following illustrative embodiments are provided to illustrate the disclosure of the present invention, these and other advantages and effects can be apparently understood by those in the art after reading the disclosure of this specification. The present invention can also be performed or applied by other different embodiments. The details of the specification may be on the basis of different points and applications, and numerous modifications and variations can be devised without departing from the spirit of the present invention.

### First Embodiment

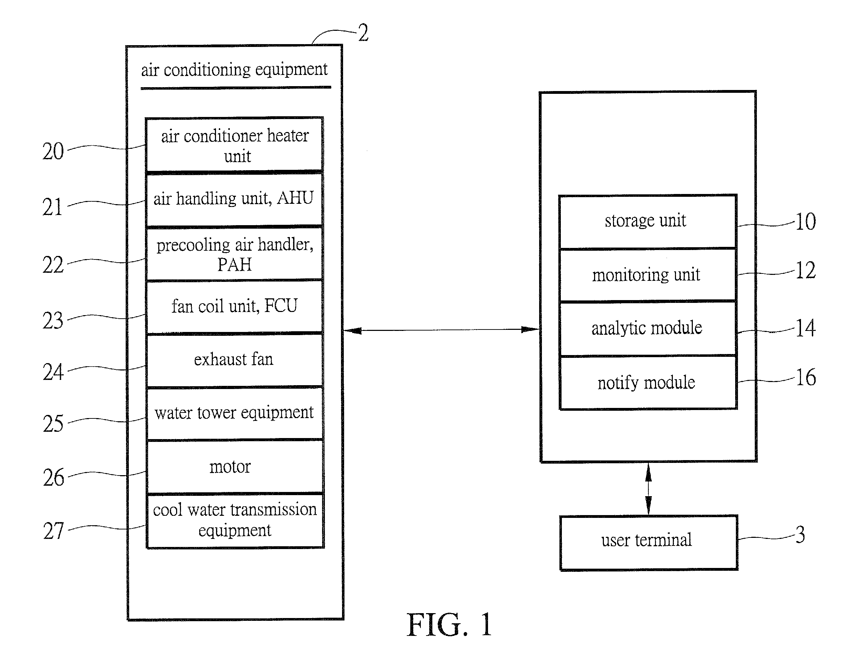

Referring to FIG 1, which is an application framework diagram of the first embodiment of the system for instantly and remotely managing assets of air conditioning equipment according to the present invention, the system for instantly and remotely managing assets of air conditioning equipment is applicable to a data processing device and comprises a storage unit 10, a monitoring unit 12, an analyzing module 14, and a notifying module 16; and the data processing device can be a device that has data processing function, such as personal computer, laptop computer, server, workstation, etc.

In the present embodiment, the system for instantly and remotely managing assets of air conditioning equipment is for monitoring air conditioning equipment assets, specifically, the air conditioning equipment 2 includes air conditioner heater unit 20, air handling unit 21, precooling air handler 22, fan coil unit 23, exhaust fan 24, water tower equipment 25, motor 26, cool water transmission equipment, etc; it should be noted herein, in other embodiments of the present invention, air conditioning equipment 2 can be selectable combination of foresaid loaded equipment or other similar loaded equipment.

The storage unit 10 is for storing asset information, record information of operational state, and relation information of operational status and asset status corresponding to various air conditioning equipment.

In the present embodiment, the asset information may include asset code, asset name, asset quantity, date acquired, date posted, original value of asset, market value of asset, net value of asset, expiration date, depreciation policy, unit employing asset, unit in charge of asset.

The record information of operational state may include on/off status, operation time, load voltage, load current, electricity efficiency, etc. of air conditioning equipment.

The relation information of operational status and asset status may comprise: preset normal operational parameters of air conditioning equipment, which includes scope parameters of, e.g. normal on/off status, operation time, load voltage, load current, and electricity efficiency; preset abnormal operational parameters of air conditioning equipment, which includes scope parameters of, e.g. abnormal on/off status, operation time, load voltage, load current, and electricity efficiency; and asset status messages corresponding to the preset normal operational parameters and the preset abnormal operational parameters; the storage unit 10 can be, e.g. a volatile or non-volatile memory unit, or can be a database format.

The monitoring unit 12 is connected to the air conditioning equipment for monitoring the operational state of the air conditioning equipment and for transmitting the monitored operational state to the storage unit 10. In the present embodiment, the monitoring unit 12 is connected to the air conditioner heater unit 20, the air handling unit 21, the precooling air handler 22, the fan coil unit 23, the exhaust fan 24, the water tower equipment 25, the motor 26, and the cool water transmission equipment 27, and is for monitoring on/off status, operation time, load voltage, load current, and electricity efficiency of each of the equipment; preferably, the monitoring unit 12 is capable of monitoring the operational status of each of the air conditioning equipment regularly, irregularly and/or on a scheduled basis based on preset monitoring time information saved in the storage unit 10; when the monitoring unit 12 detects operational status of each of the air conditioning equipment, it will save the operational status of each of the air conditioning equipment to the record information of operational state kept in the storage unit 10.

The analyzing module 14 is for determining asset status of the air conditioning equipment corresponding to its operational status based on asset information, record information of operational state, and relation information of operational status and asset status saved in the storage unit 10; accordingly, after the monitoring unit 12 detects operational status of each of the air conditioning equipment and then saves the operational status of the air conditioning equipment to the record information of operational state kept in the storage unit 10, the analyzing module 14 will determine what air conditioning equipment is monitored by the monitoring unit 12 based on asset information of corresponding air conditioning equipment, and also based on operational statuses including on/off status, operation time, load voltage, load current, electricity efficiency, etc. of the air conditioning equipment monitored by the monitoring unit 12 and saved in the storage unit 10, the analyzing module 14 will analyze each operational status monitored by the monitoring unit 12 to determine if the operational status falls in scope of preset normal operational parameters or preset abnormal operational parameters, and then determining corresponding asset status message for the air conditioning equipment according to scope of analyzed preset normal operational parameters and preset abnormal operational parameters.

The notifying module 16 is for notifying user end of the air conditioning equipment of the asset status; accordingly, after the analyzing module 14 determines asset status message corresponding to normal operational parameters and/or abnormal operational parameters of the air conditioning equipment, the analyzing module 14 will notify user end 3 of the asset status message. In the present embodiment, user end 3 is built in the data processing device, and notified by the notifying module by means of email, window message, multimedia message, etc. In other embodiments of the present invention, the user end 3 can be other portable communication device, e.g. cell phone, personal digital assistant, or laptop computer, also the asset status message can be transmitted to user end 3 of data processing device by means of email, window message, multimedia message, telephone voice mail and/or text, etc. via wireless communication network.

For instance, the analyzing module 14 determines that an air conditioning equipment monitored by the monitoring unit 12 is an air conditioner heater unit 20 based on asset information of corresponding air conditioning equipment; and then based on operational status of the air conditioner heater unit 20 monitored by the monitoring unit 12 and saved in the storage unit 10, the analyzing module 14 further analyzes if each operational status monitored by the monitoring unit 12 falls in scope of preset abnormal operational parameters, and determines that asset status message corresponding to the air conditioner heater unit 20 is abnormal according to scope of analyzed preset abnormal operational parameters; and then user end 3 is notified of a message of abnormal air conditioner heater unit 20 sent from notifying module 16.

### Second Embodiment

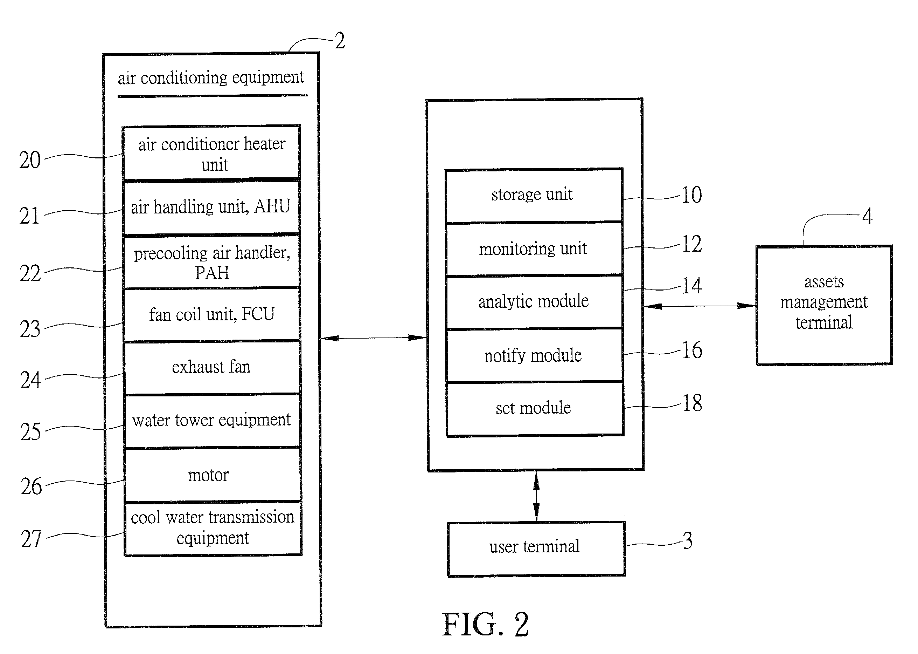

Referring to FIG. 2, which is an application framework diagram of the second embodiment of the system for instantly and remotely managing assets of air conditioning equipment according to the present invention, the application framework of the system for instantly and remotely managing assets of air conditioning equipment according to the present embodiment is mostly similar to that in the first embodiment. The major difference here is, in the present embodiment, the system for instantly and remotely managing assets of air conditioning equipment according to the present invention is further connected to an asset management end 4 that keeps asset records corresponding to various air conditioning equipment, and is further comprising a set module 18 that is for setting asset records to be kept in the asset management end 4 based on asset statuses.

Specifically, the asset management end 4 can be, e.g., a server or a client of data processing device, which has asset management function; users are capable of, via the asset management end 4, processing management of asset records, and each asset record comprises information, such as status of asset change, nature of asset change, depreciation period allowance, existing quantity allowance, original value allowance, remaining value allowance, accumulated depreciation, passed depreciation period, remaining depreciation period, total existing quantity, original value of total asset, remaining value of total asset, net value of asset, etc.

In the present embodiment, after the analyzing module 14 determines what air conditioning equipment motored by the monitoring unit 12 is based on asset information corresponding to the air conditioning equipment, further based on operational status of the air conditioning equipment monitored by the monitoring unit 12 and saved in the storage unit 10, the analyzing module 14 will determine what asset status message is corresponding to various normal operational parameters and abnormal operational parameters of air conditioning equipment kept in the monitoring unit 12, after that, the set module 18 will set asset records kept in asset management end 4 based on asset status determined by the analyzing module 14.

According to the first embodiment, when the analyzing module 14 determines that asset status message corresponding to the air conditioner heater unit 20 is a message of abnormality, the set module 18 will set asset record of the air conditioner heater unit 20 kept in asset management end 4 with message of abnormality based on asset status message determined by the analyzing module 14.

### Third Embodiment

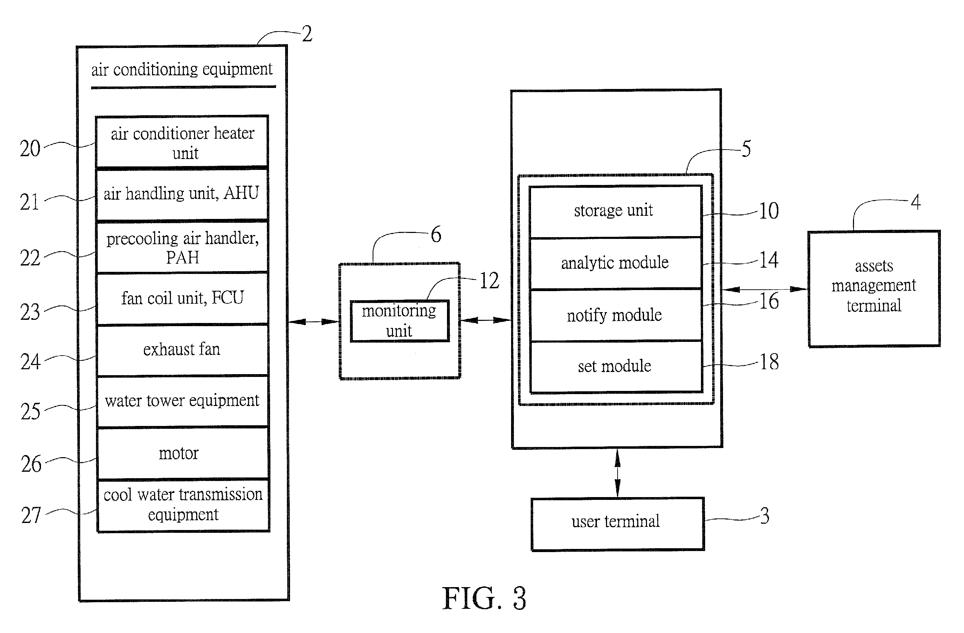

Referring to FIG. 3, which is an application framework diagram of the third embodiment of the system for instantly and remotely managing assets of air conditioning equipment according to the present invention, the system for instantly and remotely managing assets of air conditioning equipment according to the present invention is divided into an asset monitoring end 5 and air conditioning equipment monitoring end 6; it should be stated herein, the third embodiment can be implemented with the first embodiment or the second embodiment; diagram of the present invention herein is described with the second embodiment; wherein the storage unit 10, the analyzing module 14, the notifying module 16, and/or the set module 18 are allocated to the asset monitoring end 5, while the monitoring unit 12, and facilities, such as the air conditioner heater unit 20, the air handling unit 21, the precooling air handler 22, the fan coil unit 23, the exhaust fan 24, the water tower equipment 25, the motor 26, the cool water transmission equipment 27, etc. are allocated to the air conditioning equipment monitoring end 6.

Preferably, the system for instantly and remotely managing assets of air conditioning equipment according to the present invention is connected to a local area network, and comprises the asset monitoring end 5 and the air conditioning equipment monitoring end 6 built in the local area network.

In addition, the system for instantly and remotely managing assets of air conditioning equipment according to the present invention can also be connected to a wide area network, wherein the asset monitoring end 5 and the air conditioning equipment monitoring end 6 are allowed to be dispersedly built in the wide area network; more specifically, the asset monitoring end 5 is a server, while the air conditioning equipment monitoring end 6 is client.

Connection modes of the local area network or the wide area network can be wired network connection, e.g. asynchronous digital subscriber line (ADSL) or fiber to the building (FTTB) and/or wireless network connection; and applied framework therein can chose from Internet, intranet, extranet, wired/wireless local area network (LAN) virtual private network (VPN), etc.

In view of the above, the system for instantly and remotely managing assets of air conditioning equipment according to the present invention is characterized by, via operations among the storage unit, the monitoring unit, the analyzing module, the notifying module and/or the set module, allowing air conditioning equipment management to locate local or remote air conditioning equipment and then to perform instant network asset monitoring and asset management via data processing device and/or network system, as well as allowing management to be notified instantly of situation of abnormal operations of monitored air conditioning equipment and then to perform maintenance tasks immediately.

The foregoing descriptions of the detailed embodiments are only illustrated to disclose the features and functions of the present invention and not restrictive of the scope of the present invention. It should be understood to those in the art that all modifications and variations according to the spirit and principle in the disclosure of the present invention should fall within the scope of the appended claims.

## Claims

1. A system for instantly and remotely managing assets of air conditioning equipment, which is applicable to a data processing device, the system comprising:
a storage unit for saving asset information, record information of operational state, relation information of operational status and asset status, and/or monitoring time information corresponding to various air conditioning equipment;
a monitoring unit connected to the air conditioning equipment for monitoring the operational state of the air conditioning equipment and for transmitting the monitored operational state to the storage unit for saving;
an analyzing module coupled to the monitoring unit and storage unit, for determining asset status corresponding to the operational status of the air conditioning equipment monitored by the monitoring unit based on the asset information, record information of operational state, and relation information of operational status and asset status saved in the storage unit; and
a notifying module for notifying a user end the asset status of the air conditioning equipment obtained from the analyzing module.

2. The system for instantly and remotely managing assets of air conditioning equipment of claim 1, which is connected to an asset management end that keeps asset records corresponding to various air conditioning equipment, and further comprising a set module for setting asset records kept in the asset management end based on the asset status.

3. The system for instantly and remotely managing assets of air conditioning equipment of claim 2, wherein the asset management end is for processing management of asset records, each of the asset records comprises at least one of status of asset change, nature of asset change, depreciation period allowance, existing quantity allowance, original value allowance, remaining value allowance, accumulated depreciation, passed depreciation period, remaining depreciation period, total existing quantity, original value of total asset, remaining value of total asset, and/or net value of asset.

4. The system for instantly and remotely managing assets of air conditioning equipment of claim 1, wherein the monitoring unit monitors the operational status of the air conditioning equipment regularly, irregularly, and/or on a scheduled basis according to preset monitoring time information saved in the storage unit.

5. The system for instantly and remotely managing assets of air conditioning equipment of claim 4, wherein subsequent to the monitoring of the operational status of the air conditioning equipment, the monitoring unit is capable of transmitting the operational status of the air conditioning equipment to the record information of operational state saved in the storage unit.

6. The system for instantly and remotely managing assets of air conditioning equipment of claim 1, wherein the asset information is a set of information selected from the group consisting of asset code, asset name, asset quantity, date acquired, date posted, original value of asset, market value of asset, net value of asset, expiration date, depreciation policy, unit employing asset, and unit in charge of asset; the record information of operational state is a set of information selected from the group consisting of on/off status, operation time, load voltage, load current, and electricity efficiency of the air conditioning equipment; and the relation information of operational status and asset status selectively comprises preset normal operational parameters of the air conditioning equipment and/or preset abnormal operational parameters of the air conditioning equipment, and asset status messages corresponding to the preset normal operational parameters and the preset abnormal operational parameters.

7. The system for instantly and remotely managing assets of air conditioning equipment of claim 6, wherein the preset normal operational parameter of the air conditioning equipment selectively comprises scope parameters of normal on/off status, operation time, load voltage, load current, and electricity efficiency, while the preset abnormal operational parameter of the air conditioning equipment selectively comprises scope parameters of abnormal on/off status, operation time, load voltage, load current, and electricity efficiency.

8. The system for instantly and remotely managing assets of air conditioning equipment of claim 1, wherein the user end is built in the data processing device, and notified by the notifying module by means of email, window message, multimedia message, telephone voice mail and/or text.

9. The system for instantly and remotely managing assets of air conditioning equipment of claim 1, wherein the user end is a portable communication device and notified by the notifying module by means of email, window message, multimedia message, telephone voice mail and/or text.

10. The system for instantly and remotely managing assets of air conditioning equipment of claim 1, which is divided into an asset monitoring end and an air conditioning equipment monitoring end, wherein the storage unit, analyzing module, and/or notifying module are allocated to the asset monitoring end, while the monitoring unit is allocated to the air conditioning equipment monitoring end.

11. The system for instantly and remotely managing assets of air conditioning equipment of claim 10, which is connected to a local area network such that the asset monitoring end and the air conditioning equipment monitoring end are allowed to be built in the local area network.

12. The system for instantly and remotely managing assets of air conditioning equipment of claim 11, wherein connection mode of the local area network can be wired network connection of asynchronous digital subscriber (ADSL) line or fiber to the building (FTTB), and/or wireless network connection.

13. The system for instantly and remotely managing assets of air conditioning equipment of claim 11, wherein framework of the local area network is one selected from the group consisting of Internet, intranet, extranet, wired/wireless local area network (LAN) and virtual private network (VPN).

14. The system for instantly and remotely managing assets of air conditioning equipment of claim 11, which is connected to a wide area network such that the asset monitoring end and the air conditioning equipment monitoring end are allowed to be dispersedly built in the wide area network.

15. The system for instantly and remotely managing assets of air conditioning equipment of claim 14, wherein connection mode of the wide area network can be wired network connection of asynchronous digital subscriber (ADSL) line or fiber to the building (FTTB), and/or wireless network connection.

16. The system for instantly and remotely managing assets of air conditioning equipment of claim 14, wherein framework of the wide area network is one selected from the group consisting of Internet, intranet, extranet, wired/wireless local area network (LAN) and virtual private network (VPN).
